# FASCICULE DE BREVET EUROPEEN

(11) **EP 0 507 932 B1**
(45) Date de publication et mention de la délivrance du brevet: **18.10.1995**
(21) Numéro de dépôt: 91920714.2
(22) Date de dépôt: 28.10.1991
(51) Int. Cl.: G06T 15/00, G09G 5/02

(54) **PROCEDE D'EXPLOITATION DES COULEURS SUR ECRAN**
VERFAHREN ZUM STEUERN VON FARBEN AUF EINEM BILDSCHIRM
PROCESS FOR USING COLOURS ON A SCREEN

(30) Priorité: 29.10.1990 FR 9013384
(43) Date de publication de la demande: 14.10.1992
(73) Titulaire: ELF AQUITAINE PRODUCTION, 92400 Courbevoie (FR)
(72) Inventeur: COQUELET, Dominique, F-64000 Pau (FR); MEFFRE, Jean-François, F-64000 Pau (FR); KESKES, Naamen, F-64140 Mont (FR)
(74) Mandataire: Boillot, Marc
(86) Numéro de dépôt international: FR9100847
(87) Numéro de publication internationale: WO9208222

(56) Documents cités:
- WO-A-90/12369
- GB-A- 2 090 506

## Description

La présente invention se rapporte à un procédé d'exploitation des couleurs sur écran d'ordinateur particulièrement bien adapté aux images dont le contenu est cyclique, en particulier fonction d'un angle.

Il est usuel pour les applications effectuées à l'aide d'un ordinateur et comportant des sorties graphiques de réserver un écran graphique pour la visualisation des sorties de l'application et d'utiliser un terminal alphanumérique pour le dialogue homme-machine. Les images tracées par l'application dans une mémoire sont composées de points élémentaires (pixels) auxquels sont attribués des codes de couleurs définis avec un nombre B de bits permettant de définir 2^{B} couleurs, B étant communément égal à 8. Classiquement chaque code Cᵢ est associé à une couleur caractérisée par ses trois composantes Rᵢ rouge, Vᵢ vert, Bᵢ bleu, grâce à une correspondance établie dans une table encore appelée palette de couleurs (ou LUT ou Look up Table, table des fausses couleurs, colormap...) rattachée à l'écran. Le contenu de la palette de couleurs définit une fonction de transfert entre les codes et les couleurs. L'utilisation de la palette de couleurs en sortie mémoire définit une architecture de mémoire permettant la représentation d'image avec une capacité mémoire réduite. Il est usuel en outre, avec ce type d'architecture, de modifier rapidement interactivement et indépendamment de l'image, sans changement du contenu de la table ou réécriture complète de la mémoire image, les correspondances entre les codes et les couleurs. Cette modification interactive de la répartition des couleurs dans la table s'effectue grâce à une application particulière permettant de modifier la fonction de transfert.

Cette application permet d'effectuer un balayage de l'image affichée à l'écran avec différentes couleurs successives de la palette et de visualiser ainsi des jeux successifs d'une même information présentée différemment pour mieux faire ressortir une information telle que l'indication d'une saturation, d'un filtre visuel, etc...

Les fonctions de modification de fonction de transfert sont des applications, au sens mathématique, d'un ensemble de 2^{B} éléments (les Cᵢ) dans un ensemble à 2^{B} éléments (les C′ᵢ). Les fonctions communément utilisées sont des fonctions affines ou juxtaposition de portions de fonctions affines sur des domaines jointifs, qui permettent par exemple de simuler des contractions, dilatations, une inversion, une répétition de la fonction de transfert de base originale ou encore de simuler l'extinction de certaines couleurs ou plages de couleurs tout en respectant l'ordre des couleurs sur lesdits domaines.

Ces fonctions toutefois sont mal adaptées à la représentation d'images dont le contenu est une grandeur cyclique et en particulier un angle. Pour de telles images, l'obtention de jeux de représentations couleurs différentes nécessite des manipulations spéciales de la palette, voire l'utilisation d'une seconde palette spécifique ne permettant pas l'interactivité, pour que, en particulier, l'angle ϑ = 0° et l'angle ϑ = 360° soient représentés de façon similaire (sinon l'interprétation peut être faussée) et que l'utilisation de filtre passe bande incluant l'angle nul ne pose pas de problème particulier. Voir aussi le document WO-A-90/12369.

La présente invention concerne un procédé d'exploitation des couleurs permettant un balayage couleur interactif en continu et indépendant de l'image affichée, particulièrement adapté aux images dont le contenu est fonction d'un angle ou cyclique, pour l'obtention de représentations multiples différentes d'une même image.

Selon l'invention, le procédé d'exploitation des couleurs pour la modification interactive d'une palette de couleur appliquée à une image dont le contenu est cyclique, est comme défini dans la revendication 1.

La première application pour modifier la fonction de transfert de la palette de base peut être une inversion de sorte que la permutation circulaire s'effectue dans le sens contraire de celle décrite précédemment.

Cette manipulation est particulièrement intéressante pour la visualisation de cartes d'azimuts parce qu'elle permet d'obtenir des effets d'éclairage dynamique sans calcul numérique.

L'invention se rapporte également à un procédé permettant une représentation de la palette particulièrement adaptée aux images dont le contenu est un angle et qui permet une utilisation très aisée du procédé d'exploitation interactive des couleurs selon l'invention.

Il est courant de représenter sur écran la palette appliquée à l'image visualisée en même temps que l'image elle-même. Usuellement, les palettes sont représentées par une bande rectangulaire polychrome constituée de la juxtaposition de pavés de taille identique de couleurs différentes correspondant chacune à une couleur de la palette de base, prises par numéro d'ordre croissant au moins par intervalle. Il est usuel de représenter avec la palette et de sorte qu'une corrélation à l'oeil soit facile l'application de modification de la fonction de transfert éventuellement appliquée et dont la palette représentée est le résultat. Ce procédé de représentation n'a pas d'intérêt pour le procédé d'exploitation des couleurs selon l'invention dans la mesure où une application de modification de fonction de transfert telle que celle utilisée n'est pas représentable dans un espace à deux dimensions orthogonales.

Le procédé de représentation de la palette de couleurs utilisées selon l'invention pour la visualisation des images fonction d'un angle consiste à distribuer les couleurs de la palette appliquée à l'image après modification de la fonction de transfert de la palette de base par numéro d'ordre croissant non plus sur une bande rectangulaire mais sur une couronne. A chaque valeur d'angle d'éclairage choisie correspond une application de modification de la fonction de transfert et une visualisation. Un changement de l'angle d'éclairage, lequel peut être avantageusement indiqué par un marqueur pouvant décrire le cercle intérieur ou extérieur de la couronne, se traduit par une rotation de l'ensemble des couleurs à l'intérieur de la couronne, égale à l'écart entre la nouvelle valeur de l'angle de visualisation et la valeur précédente.

Un tel procédé de représentation permet d'appréhender très facilement les manipulations effectuées et l'angle d'éclairage utilisé, un balayage interactif complet de la palette des couleurs de base, rendu possible par le procédé d'exploitation des couleurs selon l'invention, se traduisant par une rotation de 360° de la couronne de couleurs.

D'autres caractéristiques et avantages de la présente invention apparaîtront plus clairement à la lecture de la description ci-après faite en référence au dessin annexé sur lequel
- la figure 1 est une représentation schématique d'une palette de couleurs et son exploitation selon l'invention,
- la figure 2 représente un montage permettant de comparer sur quatre copies d'écran l'effet du procédé d'exploitation des couleurs selon l'invention appliquée à une fonction à deux dimensions X, Y représentant l'azimut associé à une surface donnée, et
- la figure 3 représente un montage permettant de comparer à partir de 2 copies d'écran la représentation classique d'une palette de couleurs dans son utilisation courante et la représentation selon l'invention.

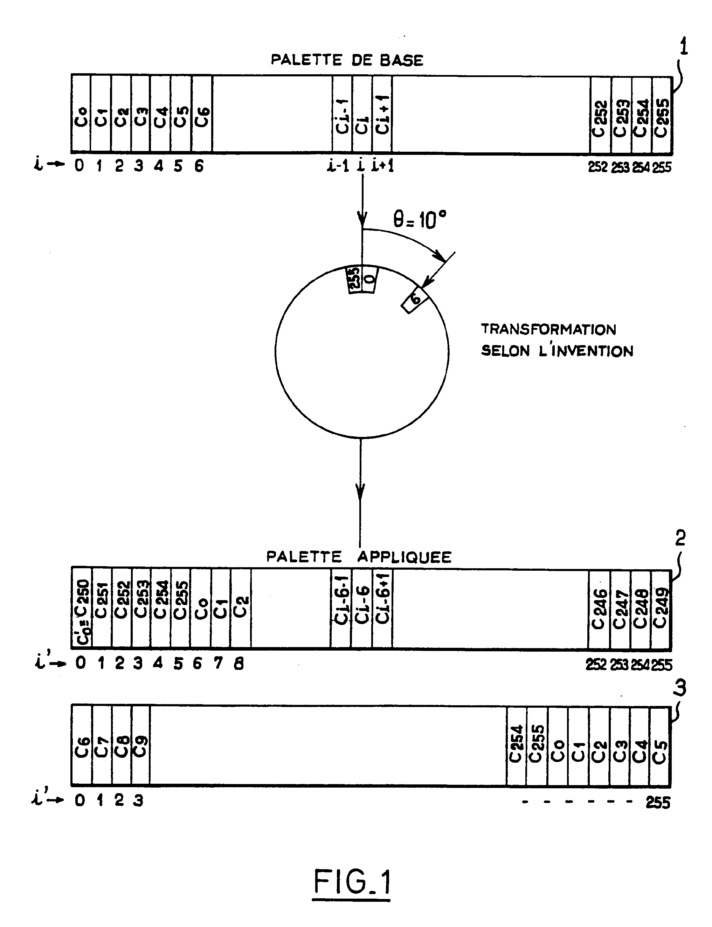

La palette de couleurs de base (1) représentée schématiquement sur la figure 1 est classiquement constituée de 256 (B=8) cellules de couleurs Cⱼ, ⱼ variant de 0 à 255, les couleurs étant schématisées par des bandes distribuées dans un rectangle et classées selon les valeurs de j allant croissant.

La palette de couleur (2) représente schématiquement la palette réellement appliquée à une image en cours de visualisation sur écran après qu'on ait appliqué à la palette une transformation selon l'invention. Dans l'exemple ici schématisé, l'angle d'éclairage choisi est ϑ = 10°. Cet angle est situé dans le 7è intervalle d'angle associé à la couleur C₆. La transformation va donc consister à décaler les couleurs de la palette de base vers la droite de 6 cellules de sorte qu'à la nouvelle cellule C′₆, on associe la couleur C₀ de la palette de base, qu'à la nouvelle cellule C′i′ on associe la couleur de la palette de base Cᵢ tel que i = i′-6 si i est positif ou nul ou la couleur de la palette de base Cj tel que j = i′+256-6 dans le cas contraire.

La permutation peut également se faire en sens inverse suivant la convention choisie. Sur la palette obtenue (3) on associe alors, à la nouvelle cellule C′₀ la couleur C₆ de la palette de base, et de façon générale on associe à la nouvelle cellule C′ᵢ′ la couleur C_{i′+6} de la palette de base si i′+6 est inférieur ou égal à 255 et la couleur C_{i′+6-255} dans le cas contraire.

Le procédé a été appliqué à une image (256 pixels x 256 pixels) représentant les valeurs des pendages maximum calculés pour chacun des points d'une surface topographique situés au noeud d'une grille d'autant de mailles de côté que de pixels. Chaque ton de gris correspond à une tranche donnée de valeurs de pendages pour un angle ϑ d'éclairage donnée, la palette changeant suivant la valeur de ϑ.

Ainsi la couleur associée à un pixel C_{i,j} donné permet de déterminer la valeur approximative du pendage au point correspondant de la surface topographique.

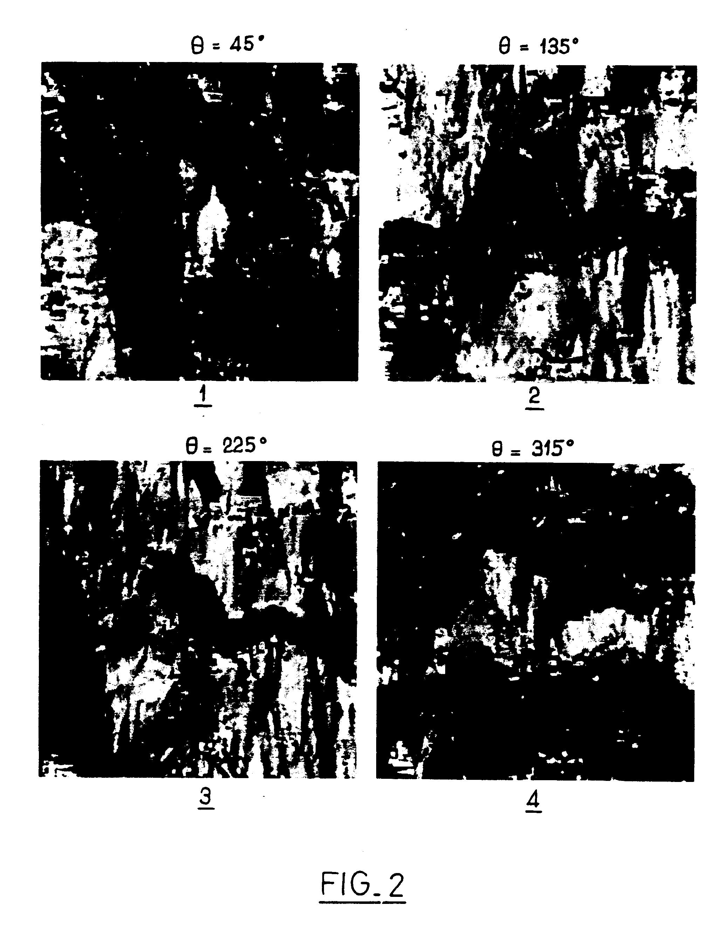

Les quatre images (1) à (4) figurant sur la figure 2 représentent une même fonction représentée avec 4 valeurs d'angle d'éclairage différentes respectivement 45°, 135°, 225°, 315°. L'effet obtenu est celui d'un éclairage latéral tournant, ce qui peut permettre de mettre en évidence des détails de configuration (reliefs ou autres), qui n'apparaissent pas si l'on ne dispose que d'une seule ou de quelques images au mieux.

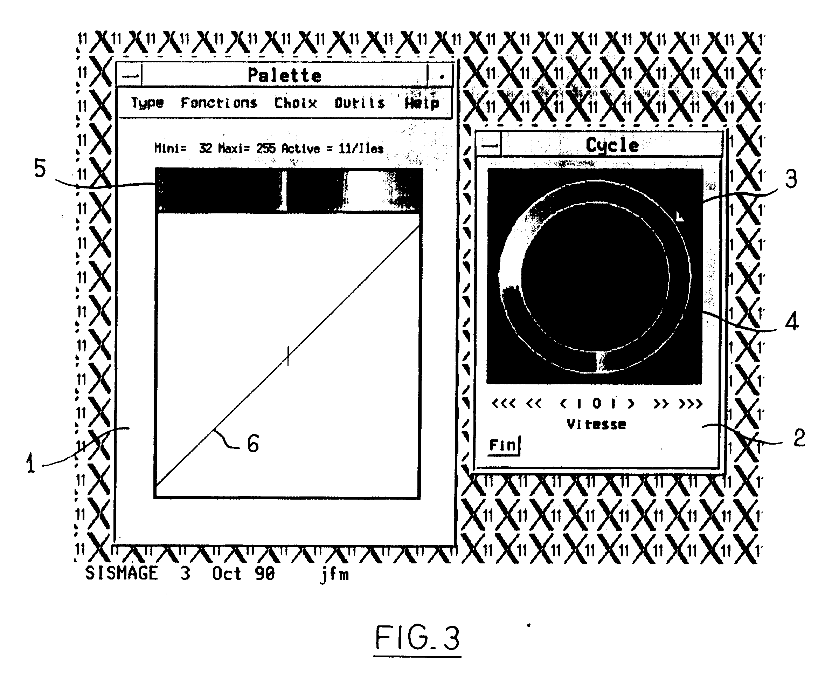

La figure 3 permet de comparer une représentation (1) possible d'une palette de couleurs (5) selon le procédé classique et sa fonction de transfert associée (6) avec une représentation (2) possible selon l'invention de la même palette distribuée dans une couronne (4), l'angle d'éclairage choisi étant indiqué par un marqueur (3).

## Revendications

1. Procédé d'exploitation des couleurs pour la modification interactive d'une palette de couleurs appliquée à une image de contenu cyclique visualisée sur un écran, à partir d'une palette de couleurs de base attachée à cet écran et renfermant 2^{B} couleurs, B étant un nombre entier positif, ledit procédé étant du type dans lequel on décompose l'intervalle angulaire [0°, 360°[ en 2^{B} tranches angulaires de taille égale et fait correspondre à chacune desdites tranches un numéro d'ordre allant croissant de 1 à 2^{B} en fonction des angles, on crée la palette de couleurs de base en faisant correspondre une couleur différente à chacun des numéros d'ordre allant de 1 à 2^{B} et se caractérisant en ce que l'on applique successivement à l'image visualisée sur l'écran différents palettes de couleurs correspondant à différents valeurs d'un angle d'éclairage ϑ, la palette de couleurs correspondant à chaque nouvelle valeur de l'angle d'éclairage ϑ étant créée, à partir de la palette de couleurs de base, par permutation circulaire des couleurs de l'ensemble des 2^{B} couleurs de cette palette de base de telle sorte que les couleurs sortant d'un côté dudit ensemble du fait de la permutation soient réintégrées de l'autre côté de cet ensemble et que la couleur de la nouvelle palette assignée au numéro d'ordre i corresponde à la couleur de la palette de base associée au numéro d'ordre correspondant à la tranche angulaire renfermant l'angle nul ou bien que la couleur de la nouvelle palette assignée au numéro d'ordre associé à la tranche angulaire renfermant l'angle nul corresponde à la couleur de la palette de base associée au numéro d'ordre i, i représentant le numéro d'ordre de la tranche angulaire contenant la valeur de l'angle d'éclairage ϑ.

2. Procédé selon la revendication 1, caractérisé en ce que l'image visualisée sur l'écran est une carte d'azimuts ou de pendages.

3. Procédé permettant une représentation sur écran de la palette de couleurs pour la mise en oeuvre du procédé selon la revendication 1 ou 2, dans lequel on distribue, à l'intérieur d'une couronne fermée, les 2^{B} couleurs de la palette de couleurs de base par numéros d'ordre croissants allant de 1 à 2^{B}, caractérisé en ce que l'on réalise ladite distribution de telle sorte que, à l'aplomb d'un repère marquant l'angle nul, soit disposée, pour un angle d'éclairage ϑ choisi contenu dans une tranche angulaire de numéro d'ordre i, la couleur de la palette de base associée au numéro d'ordre i ou bien associée au numéro d'ordre symétrique de i par rapport au numéro d'ordre affecté à la tranche angulaire incluant l'angle nul, et en ce que l'on effectue, pour chaque modification de l'angle d'éclairage, une rotation de l'ensemble des couleurs à l'intérieur de la couronne égale à l'écart entre la nouvelle valeur ϑ′ de l'angle d'éclairage et l'ancienne valeur ϑ.

4. Procédé selon la revendication 3, caractérisé en ce qu'on l'indique l'angle d'éclairage ϑ par un marqueur mobile situé sur le cercle extérieur ou intérieur de la couronne en un point tel que l'angle entre le marqueur et le repère marquant l'angle nul soit égal à ϑ.

## Patentansprüche

1. Verfahren zur Farberzeugung für die interaktive Veränderung einer Farbenpalette, die für ein auf einem Bildschirm optisch dargestelltes Bild mit zyklischem Inhalt verwendet wird, ausgehend von einer Basisfarbenpalette, die diesem Bildschirm beigegeben ist und die 2^{B} Farben umfaßt, wobei B eine positive ganze Zahl ist,
- wobei das Verfahren so beschaffen ist, daß das Winkelintervall [0°, 360°[ in 2^{B} gleich große Winkelabschnitte zerlegt wird und jedem dieser Abschnitte eine von 1 bis 2^{B} ansteigende Ordnungsnummer als Funktion der Winkel zugeordnet wird und
- daß die Basisfarbenpalette dadurch geschaffen wird, daß jeder der von 1 bis 2^{B} verlaufenden Ordnungsnummern eine unterschiedliche Farbe zugeordnet wird,
dadurch gekennzeichnet, daß
- nacheinander für das auf dem Bildschirm optisch dargestellte Bild verschiedene Farbenpaletten verwendet werden, die verschiedenen Werten eines Beleuchtungswinkels ϑ entsprechen,
- wobei die Farbenpalette, die jedem neuen Wert des Beleuchtungswinkels ϑ entspricht, ausgehend von der Basisfarbenpalette durch zyklische Permutation der Farben der Gesamtheit der 2^{B} Farben dieser Basispalette so geschaffen wird, daß die Farben, die auf einer Seite der Gesamtheit aufgrund der Permutation herausfallen, auf der anderen Seite dieser Gesamtheit wieder eingegliedert werden und daß die Farbe der neuen Palette, die der Ordnungsnummer i zugeordnet ist, der Farbe der Basispalette entspricht, die der Ordnungsnummer zugeordnet ist, die dem den Winkel Null einschließenden Winkelabschnitt entspricht, oder daß die Farbe der neuen Palette, die der Ordnungsnummer zugeordnet ist, die dem den Winkel Null einschließenden Winkelabschnitt zugehört, der Farbe der Basispalette entspricht, die der Ordnungsnummer i zugehört, wobei i die Ordnungsnummer des Winkelabschnitts darstellt, der den Wert des Beleuchtungswinkels ϑ enthält.

2. Verfahren nach Anspruch 1, dadurch gekennzeichnet, daß das auf dem Bildschirm optisch dargestellte Bild eine Karte mit Azimuten oder Fallinien ist.

3. Verfahren, das eine Darstellung der Farbenpalette auf dem Bildschirm für die Durchführung des Verfahrens nach Anspruch 1 oder 2 erlaubt, bei welchem im Inneren eines geschlossenen Kranzes die 2^{B} Farben der Basisfarbenpalette nach von 1 bis 2^{B} ansteigenden Ordnungsnummern verteilt werden, dadurch gekennzeichnet, daß die Verteilung so durchgeführt wird, daß senkrecht zu einer den Winkel Null anzeigenden Markierung für einen ausgewählten Beleuchtungswinkel ϑ, der in einem Winkelabschnitt der Ordnungsnummer i enthalten ist, die Farbe der Basispalette angeordnet ist, die der Ordnungsnummer i oder auch der Ordnungsnummer zugehört, die im Verhältnis zu der Ordnungsnummer, die dem den Winkel Null enthaltenden Winkelabschnitt zugewiesen ist, zu i symmetrisch ist, und daß für jede Veränderung des Beleuchtungswinkels eine Drehung der Gesamtheit der Farben im Inneren des Kranzes durchgeführt wird, die dem Abstand zwischen dem neuen Wert ϑ des Beleuchtungswinkels und dem alten Wert ϑ entspricht.

4. Verfahren nach Anspruch 3, dadurch gekennzeichnet, daß der Beleuchtungswinkel ϑ durch eine im äußeren oder inneren Kreis des Kranzes befindliche bewegliche Anzeigeeinrichtung an einem Punkt angezeigt wird, so daß der Winkel zwischen der Anzeigeeinrichtung und der Markierung, die den Nullwinkel anzeigt, ϑ entspricht.

## Claims

1. Process for using colours for the interactive modification of a palette of colours applied to an image with a cyclic content displayed on a screen, from a palette of base colours attached to this screen and containing 2^{B} colours, B being a positive integer, said process being of the type in which the angular interval [0°, 360°[ is broken down into 2^{B} angular sections of equal size and a serial number going in ascending order from 1 to 2^{B} as a function of the angles is made to correspond to each of said sections, and the palette of base colours is created by making a different colour correspond to each of the serial numbers going from 1 to 2^{B}, characterized in that different palettes of colours corresponding to different values of a lighting angle ϑ are applied successively to the image displayed on the screen, the palette of colours corresponding to each new value of the lighting angle ϑ being created, from the base colour palette, by circular permutation of the colours of the assembly of the 2^{B} colours in this base colour palette such that the colours emerging from one side of this assembly as a result of the permutation are reintegrated on the other side of this assembly; and in that the colour of the new palette assigned to the serial number i corresponds to the colour of the base palette associated with the serial number corresponding to the angular section containing the angle zero; or in that the colour of the new palette assigned to the serial number associated with the angular section containing the angle zero corresponds to the colour of the base palette associated with the serial number i, i representing the serial number of the angular section containing the value of the lighting angle ϑ.

2. Process according to Claim 1, characterized in that the image displayed on the screen is a map of azimuths or dips.

3. Process permitting the display on screen of a palette of colours for implementing the process according to Claim 1 or 2, in which the 2^{B} colours of the base colour palette are distributed, within a closed ring, according to increasing serial numbers going from 1 to 2^{B}, characterized in that the colours are distributed such that, for a selected lighting angle ϑ in an angular section having the serial number i, the colour of the base palette associated with the serial number i or associated with the symmetrical serial number of i relative to the serial number allocated to the angular section containing the angle zero is disposed above a mark marking the angle zero; and in that, for each modification of the lighting angle, the assembly of colours within the ring is subject to a rotation which is equal to the distance between the new value ϑ′ of the lighting angle and the earlier value ϑ.

4. Process according to Claim 3, characterized in that the lighting angle ϑ is indicated by a movable marker located on the outer or inner circle of the ring at a point such that the angle between the marker and the mark marking the angle zero is ϑ.
